Europäisches Patentamt

European Patent Office

Office européen des brevets

(19)

(11) Publication number : **0 474 363 A1**

# (12) EUROPEAN PATENT APPLICATION

(21) Application number : **91307179.1**

(22) Date of filing : **05.08.91**

(51) Int. Cl.⁵ : **B63H 9/02**

(30) Priority : **23.08.90 GB 9018562**

(43) Date of publication of application :
**11.03.92 Bulletin 92/11**

(84) Designated Contracting States :
**AT BE CH DE DK ES FR GB GR IT LI LU NL SE**

(71) Applicant : **England, Kenneth John**
**6 Longridge Court, Barrington Industrial**
**Estate**
**Bedlington, Northumberland NE22 7DQ (GB)**

(72) Inventor : **England, Kenneth John**
**6 Longridge Court, Barrington Industrial**
**Estate**
**Bedlington, Northumberland NE22 7DQ (GB)**

(74) Representative : **Sanderson, Michael John et**
**al**
**MEWBURN ELLIS 2 Cursitor Street**
**London EC4A 1BQ (GB)**

(54) **Wind propulsion system.**

(57)   A wind propulsion system primarily for ships comprises a substantially cylindrical rotor (2) rotatable about its central longitudinal axis and, rotatably integral with the rotor (2) to form an axial extension thereof, a wind turbine (4) including a plurality of elongate blades (6,8) each of curved shape in transverse section, the diameter of the peripheral envelope (10) of the blades (6,8) being less than the diameter of the rotor (2). In use and with the central longitudinal axis of the system extending transversely to the wind direction, the turbine (4) is rotated by the wind at a peripheral speed $W_T$, the increased diameter of the rotor (2) resulting in the rotor (2) being rotated at a proportionally increased peripheral speed $W_R$ whereby a propulsive force $L_R$ is established in accordance with the Magnus effect.

Fig.3.

This invention relates to wind propulsion systems and has particular application to the propulsion of ships utilising the Magnus effect.

The use of Magnus effect rotors as substitute 'sails' for sea-going ships is well-established and has been for some considerable time. The Magnus effect can be produced by virtually any shape or form of rotating body, but, in most ship propulsion systems, these bodies take the form of rotating cylinders or rotors as they are more commonly known.

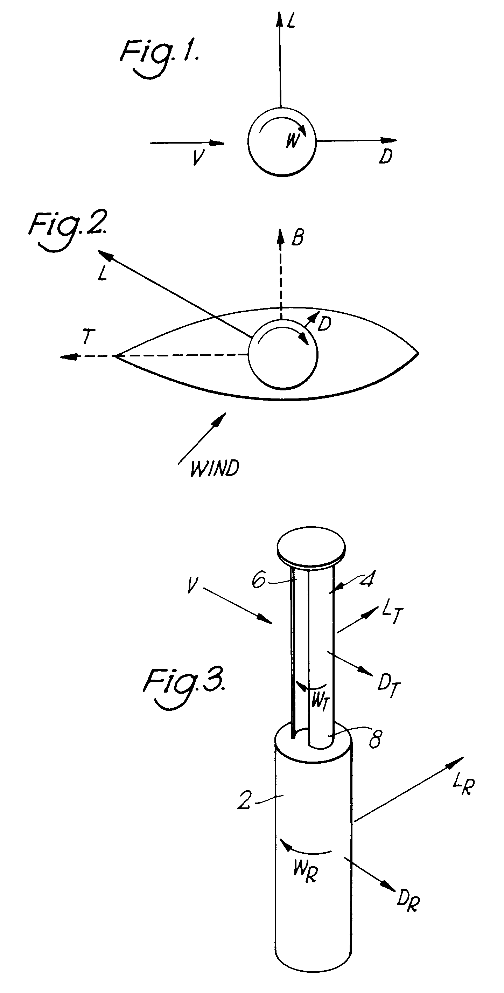

Referring to Figs. 1 and 2 of the accompanying drawings which are, respectively, a plan view from above of a rotating cylinder and a plan view from above of a ship on which is mounted a cylinder as shown in Fig. 1, the cylinder is rotating about its central upright axis at a peripheral speed W and is exposed to a wind speed V. The Magnus effect determines that the cylinder generates a force L in a direction transverse to both the wind direction and the axis of the cylinder, and a further force D in the direction of the wind.

The magnitude of the force L is a function of the ratio of the peripheral speed W of the cylinder to the wind speed V, while the ratio of the force L to the force D is also a function of the speed ratio $\frac{W}{V}$, and this $\frac{L}{D}$ ratio can approach a value of 8.

Fig. 2 shows these forces resolved along and perpendicular to the ship's fore and aft axes, giving a propulsive force T and a lateral force B.

In effect, a rotating cylinder in an air flow acts as an aerofoil but, in comparison to a conventional aerofoil such as an aircraft wing, a rotating cylinder can generate a much higher force L for a given planform area although at the expense of a lower $\frac{L}{D}$ ratio.

The best known example of the Magnus effect sail system is that of Anton Flettner which was devised in the 1920s. The main advantage of this system over other sail systems of the time was that it could develop considerably higher forces in relation to its area than the conventional cloth sails, typically three times that of the best cloth sails. Further advantages were that the rotors did not require trimming to wind direction and were of simple fixed shape.

However, in order for the Flettner rotor to create the Magnus effect, it was first of all necessary for the rotor to be rotated, and this was achieved by an auxiliary source of power such as an electric motor.

There have been attempts to develop rotor systems which could be driven by wind power alone, but these have not proved successful in practice. For example United Kingdom specification no. 248447 proposes various forms of vertical axis wind turbines to drive the rotor, while United States specification no. 1697574 proposes the provision of a turbine itself acting as the rotor.

However, these systems failed because the rotational speed W developed thereby was too low to generate worthwhile propulsive forces.

It would be desirable to be able to provide a Magnus effect rotor capable of developing substantially higher propulsive forces than heretofore and powered purely by the wind.

According to the present invention there is provided a wind propulsion system comprising a substantially cylindrical rotor rotatable about its central longitudinal axis, and, rotatably integral with said rotor to form an axial extension thereof, a wind turbine including a plurality of axially elongate blades each of curved shape in transverse section, the diameter of the peripheral envelope of said blades being less than the diameter of the rotor.

In use, the system is installed on, for example, a ship with the central longitudinal axis of the rotor extending transversely to the direction of the wind, for example substantially upright, although the system can be used in a horizontal mode. Thus the wind rotates the turbine at a peripheral speed $W_T$, the increased diameter of the rotor resulting in the rotor being rotated at a proportionally increased peripheral speed $W_R$, which peripheral speed establishes a propulsive force $L_R$ in accordance with the Magnus effect.

Preferably the free end of the turbine remote from the rotor carries an end plate located in a plane perpendicular to the central longitudinal axis of the system, thereby to prevent undesirable turbulence about the free end of the turbine and to maintain a substantially two-dimensional air flow pattern around the turbine and rotor.

Conveniently the turbine includes two opposed, partially overlapping blades each of generally semi-circular shape in transverse section, the positions of the blades relative to one another -preferably being adjustable such that the system can operate in both rotational modes.

In a preferred embodiment of the invention the turbine is axially movable relative to the rotor between a fully extended position forming an axial extension of the rotor and a fully retracted position housed within the rotor.

By way of example only, an embodiment of the invention will now be described in greater detail with reference to the accompanying drawings of which:

Fig. 3 is a schematic isometric view of a wind propulsion system according to the invention;

Fig. 4 is a vertical section through a wind propulsion system according to the invention mounted on a ship's deckhouse;

Figs. 5 and 6 are schematic front views of the system of Fig. 4 with the turbine fully extended and fully retracted respectively, and

Figs. 7 and 8 are schematic horizontal sections through the turbine blades in the different rotational modes of the turbine.

Referring to the drawings, the illustrated wind propulsion system comprises a cylindrical rotor 2 on one end of which is mounted a wind turbine indicated generally at 4 and forming an axial extension of the rotor 2, the rotor 2 and turbine 4 being rotatable as a unit about the central longitudinal axis of the system.

The turbine 4 includes a pair of elongate blades 6,8 each of generally semi-circular shape in transverse section and located with their hollow interiors facing one another in partially overlapping relationship as best seen in Figs. 7 and 8.

The theoretical envelope 10 embracing the blades 6,8 is of generally oval shape and has a maximum diameter significantly less than that of the rotor 2, typically half that of the rotor 2.

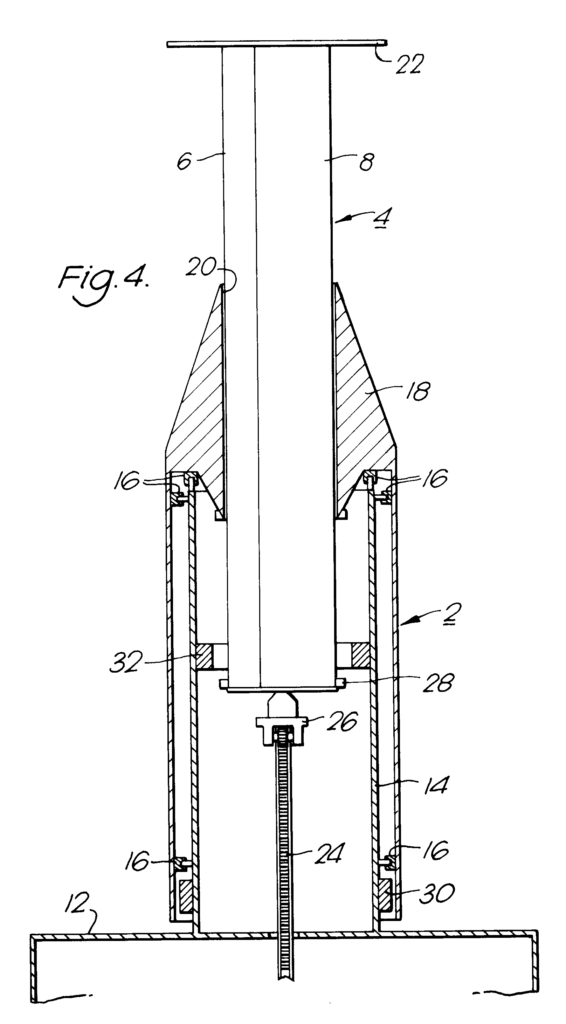

In use and referring to Fig. 3, the system is located in an upright position and the turbine 4 is exposed to a wind speed V whereby the turbine 4 is rotated at a peripheral speed $W_T$. As the rotor 2 is rotatably integral with the turbine 4, the rotor 2 is rotated thereby, and, as the diameter of the rotor 2 is greater than that of the turbine 4, the rotor has a proportionally greater peripheral speed $W_R$.

According to the Magnus effect, and as previously explained, a propulsive force $L_R$ is therefore produced by the rotor 2 in a direction perpendicular to that of the wind V together with a force $D_T$ in the wind direction. The peripheral speed $W_R$ is sufficiently high to develop a significant transverse force $L_R$. The dimensions of the rotor 2 and the turbine 4 which, for a given wind speed V, determine the magnitude of the force $L_R$, are arrived at by balancing the power output of the wind turbine 4 against the power requirement of the rotor and then calculating the size of turbine required to obtain the optimum rotor specific speed (specific

$$\text{speed} = \frac{\text{peripheral speed } W_R}{\text{wind speed V}}\text{).}$$

Fig. 4 illustrates a practical embodiment of the system of Fig. 3 in which therotor is indicated generally at 2, the turbine is indicated generally at 4 and the elongate turbine blades are referenced 6 and 8.

More particularly, the system is mounted on a ship's deckhouse 12 upwardly from which extends a hollow cylindrical mast 14. The rotor 2 incorporates a series of bearing roller assemblies 16 in the upper and lower regions thereof which engage the mast 14 and by virtue of which the rotor 2 can rotate in a controlled manner on the mast 14 about the central longitudinal axis of the rotor 2.

The upper regions of the rotor 2 have integrally formed therewith a tubular cowling 18 the hollow bore 20 through which conforms in shape with that of the aforementioned envelope 10 and the outer wall of which tapers progressively upwardly and inwardly from a circular cross section at the base thereof to the shape of the envelope 10 at its upper end.

Mounted in the cowling 18 is the wind turbine 4, the co-operation between the blades 6,8 and the bore 20 of the cowling 18 ensuring that the turbine 4 and rotor 2 rotate as one, while the blades 6,8 are axially slidable in the cowling 18 as will be detailed below.

The provision of the cowling 18 to interconnect the rotor 2 and the turbine 4 ensures an optimum aerodynamic shape to the system with minimum wind drag losses, while a plate 22 secured on the free end of the turbine 4 in a plane perpendicular to the central longitudinal axis of the system reduces turbulence about the end of the turbine and assists in maintaining a substantially two-dimensional air flow pattern around the turbine 4.

The turbine 4 is supported on a fixed vertical rack 24 extending vertically from the deckhouse 12, the rack carrying a pinion-driven trolley 26 which engages the base of the turbine 4. The blades 6, 8 of the turbine 4 can thus be raised and lowered relative to the rotor 2 by appropriate upward or downward movement of the trolley 26 on the rack 24.

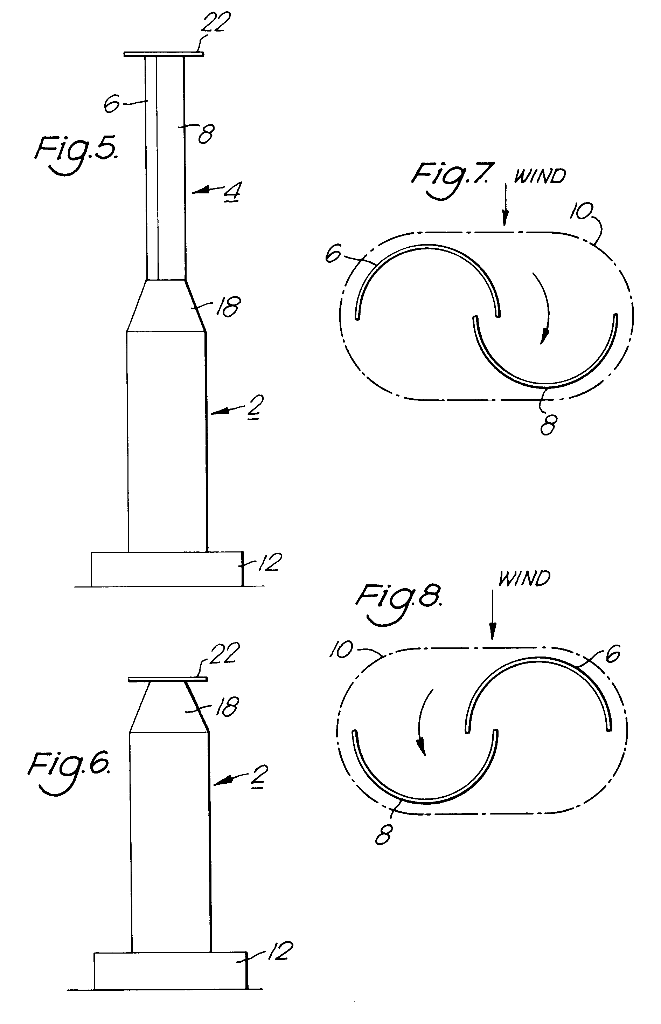

Once the turbine 4 has achieved its fully extended position, as shown schematically in Fig. 5, a latch mechanism 28 is activated to retain the turbine in that position and to disengage the trolley 26 from the turbine thus minimising power efficiency losses caused by friction.

The turbine 4 can be located axially anywhere between the fully extended position shown in Fig. 5 and the fully retracted position shown in Fig. 6 depending upon the wind collection properties required.

When the turbine 4 is fully retracted, and in order to prevent any rotational movement of the system as a whole, a rotor braking mechanism 30 is activated.

It is essential for the rotor 2 to be able to rotate in either direction to cope with wind from both beams, and the relative positions of the blades 6,8 must therefore be capable of being altered. The system incorporates a mechanism 32 which allows adjustment of the geometrical attitudes of the blades 6,8 between the two positions shown in Figs. 7 and 8. This blade geometry adjustment facility enables the blades 6,8 to be displaced and manoeuvred to accommodate either handed rotational mode as indicated by the arrows in Fig. 7 and 8.

Thus, to reverse thrust, or to make provision for a reversal in wind direction as experienced during a tacking manoeuvre, the turbine 4 is lowered into the fully retracted position of Fig. 6, the rotor 2 is braked, the turbine blade geometry reversing mechanism 32 is activated, the brake mechanism 30 is released and the turbine 4 is raised.

The described system is particularly suited to the propulsion of ships although it clearly has other aerodynamic applications as well. It is envisaged that the preferred applications will be as an auxiliary propulsion system for large merchant ships, as a main propulsion system for smaller merchant ships and recreational vessels, and as a silent propulsion system for naval ships.

The system of the invention has many advantages over established systems and in particular:

a) has a small surface area in relation to other sail systems;

b) requires a minimum of deck space and volume above the deck for installation and operation;

c) can be instilled as a multiple of small units;

d) does not require trimming to wind direction, and has no angle of incidence in the conventional aerofoil sense;

e) has a tolerance to disturbed flow and does not stall;

f) has a simple structural shape;

g) can easily be controlled by reducing the rotor speed.

The geometry of the system is arranged so that a high transverse force L is developed thereby - in particular the ratio of the rotor diameter to turbine diameter is typically 2:1 giving a ratio of specific speeds of the rotor and turbine of 2:1.

The generation of the maximum transverse force L in association with a low in-line force D requires the establishment of as near as possible a two dimensional air flow pattern around the rotor 2. In practice this means that the flow over the ends of the rotor 2 from one side to the other due to the side-to-side wind pressure differential should be minimised in relation to the total flow.

To achieve maximum turbine efficiency, a similar requirement applies to the wind turbine 4. This is achieved by using a high aspect ratio - i.e. a large height in relation to diameter - in combination with the provision, of the end plate 22.

The provision of the tapering cowling 18 further contributes to the aerodynamic nature of the overall system, while the fully adjustable axial location of the turbine 4 between the extreme positions shown in Figs. 5 and 6 enables fine control of the rotor thrust up to its maximum output.

The precise construction of the wind propulsion system can vary from that illustrated without departing from the scope of the invention and in particular more than two blades may be incorporated in the wind turbine 4.

## Claims

1. A wind propulsion system comprising a substantially cylindrical rotor (2) rotatable about its central longitudinal axis and characterised by a wind turbine (4) rotatably integral with said rotor (2) to form an axial extension thereof, the wind turbine (4) including a plurality of axially elongate blades (6, 8) each of curved shape in transverse section, the diameter of the peripheral envelop (10) of said blades (6, 8) being less than the diameter of the rotor (2).

2. A wind propulsion system as claimed in claim 1 in which the free end of the turbine (4) remote from the rotor (2) an end plate (22) located in a plane perpendicular to the central longitudinal axis of the system.

3. A wind propulsion system as claimed in claim 1 or claim 2 in which the turbine (4) includes two opposed, partially overlapping blades (6, 8) each of generally semi-circular shape in transverse section.

4. A wind propulsion system as claimed in claim 3 in which the positions of the blades (6, 8) relative to one another are adjustable such that the system can operate in both rotational modes.

5. A wind propulsion system as claimed in any one of claims 1 to 4 in which the turbine (4) is axially movable relative to the rotor (2) between a fully extended position forming an axial extension of the rotor (2) and a fully retracted position housed within the rotor ( 2 ).

6. A wind propulsion system as claimed in any one of claims 1 to 5 in which the rotor (2) includes an end cowling (18) having a bore (20) therethrough the transverse section of which conforms with that of the peripheral envelope (10) of the blades (6,8), the turbine (4) being housed in said bore (23) to be axially slidable therein.

Fig.1.

Fig.2.

WIND

Fig.3.

Fig.4.

*Fig.5.*

22

6

8

4

18

2

12

*Fig.6.*

22

18

2

12

*Fig.7.* WIND

6

10

8

*Fig.8.*

WIND

10

6

8

**European Patent Office**

## EUROPEAN SEARCH REPORT

Application Number

EP    91 30 7179

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| X | DE-A-3 246 694 (KREBS)<br>* page 9, line 1 - page 10, line 1 *<br>* page 11, line 9 - page 12, line 1 *<br>* figures 3-6 *<br>--- | 1-3,5,6 | B63H9/02 |
| X | DE-C-462 869 (INST V. AERO- EN HYDRO-DYNAMIEK)<br>* column 1, line 23 - line 28 * | 1,2 | |
| Y | <br>--- | 3-6 | |
| Y | US-A-2 596 726 (RYDELL)<br>* column 1, line 9-24; figures 1,2,4 *<br>--- | 3-6 | |
| D,X | GB-A-248 447 (ROUND)<br>* page 2, line 76 - line 85 *<br>--- | 1,5 | |
| A | US-A-4 342 539 (POTTER)<br>* figure 2 *<br><br>----- | 5,6 | |
| | | | **TECHNICAL FIELDS SEARCHED (Int. Cl.5)**<br><br>B63H<br>F03D |

The present search report has been drawn up for all claims

| Place of search | Date of completion of the search | Examiner |
|---|---|---|
| THE HAGUE | 16 DECEMBER 1991 | HUNT A.E. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.............................................................
& : member of the same patent family, corresponding
     document

EPO FORM 1503 03.82 (P0401)